# EUROPEAN PATENT APPLICATION

(11) **EP 1 351 427 A1**
(43) Date of publication of application: **08.10.2003**
(21) Application number: 02006259.2
(22) Date of filing: 20.03.2002
(51) Int. Cl.: H04L 1/20

(54) **Jitter determination for digital data signals separating random jitter from deterministic jitter**

(71) Applicant: Agilent Technologies, Inc. (a Delaware corporation), Palo Alto, CA 94303 (US)
(72) Inventor: Mueller, Marcus, 70569 Stuttgart (DE); Schinzel, Peter, 71134 Gärtringen (DE); Fleischer-Reumann, Michael, 72218 Gültlingen (DE)
(74) Representative: Barth, Daniel

(57) **Abstract**

For determining a corrected jitter value of a digital data signal to be measured, a reference jitter value is determined from a reference measurement for a first digital signal with substantially no data dependency, the reference jitter value representing an amount of jitter detected for the reference measurement. A jitter value is determined from a data measurement for the digital data signal, the jitter value representing an amount of jitter detected for the data measurement. The corrected jitter value (JD) is derived by a subtraction of the determined reference jitter value and the determined jitter value.

## Description

### BACKGROUND OF THE INVENTION

The present invention relates to jitter measurements for digital data communication testing.

Characterizing the transient behavior of high-speed digital circuits, i.e. the transition from a logical zero to a logical one and vice versa, has become increasingly important for designing as well as manufacturing such digital circuits. Timing problems can cause single transmission errors, or temporary or even permanent outage of an entire communication system, and have to be avoided. The standard overall figure of merit for a communications system is the Bit Error Rate (BER), however a high value of BER does not necessarily indicate timing problems, as there are many other potential sources of error in a system (for example level/threshold mismatch).

One of the key specifications of high-speed circuits with respect to timing is Jitter. ITU-T G.701 defines jitter as short-term non-cumulative variations of the significant instants of a digital signal from their ideal positions in time. The significant instant can be any convenient, easily identifiable point on the signal such as the rising or falling edge of a pulse or the sampling instant. By plotting the relative displacement in the instants between an ideal pulse train and a real pulse train that has some timing jitter, the so-called jitter function is obtained. In addition to the jitter time function, the jitter spectrum can be displayed in the frequency domain. Jitter can also be displayed using so-called Jitter-Histograms showing the likelihood for a transition.

Jitter histograms can be measured using a BER Tester, such as the Agilent® 81250 ParBERT® provided by the applicant Agilent Technologies. The histogram values are obtained from a BER vs. Sample Delay measurement (generally referred to as the so-called bathtub curve) by taking the absolute value of the derivative. The jitter histogram of a digital signal with alternating rising and falling edges can be described by its peak-to-peak jitter value defined as the value of the system period (or system clock period) minus a phase margin value for a given residual BER value. The phase margin value represents the 'width' of the bathtub curve at the given residual BER value. In other words, the peak-to-peak jitter value represents the minimum full range that excludes a certain part of the total jitter population.

More information about jitter is disclosed in the Application Note 1267, "Frequency agile jitter measurement system", 5963-5353E, April 1995, by Hewlett-Packard, see e.g. under:
http://www.tm.agilent.com/classes/MasterServlet?view=applicationnote&apn -ItemID=1000000272&language=eng&locale=US.

### SUMMARY OF THE INVENTION

It is an object of the invention to provide an improved jitter measurement. The object is solved by the independent claims. Preferred embodiments are shown by the dependent claims.

The invention makes use of a jitter model wherein jitter (in real-world signals) is generally composed of deterministic and random jitter content. Deterministic jitter (also referred to as data-dependent jitter) is bounded in amplitude and has specific causes (e.g. Duty Cycle Distortion, Inter Symbol Interference, etc.). Random jitter is unbounded and caused by data-independent effects, such as thermal noise etc. Further in this model, purely random jitter (i.e. jitter with only random jitter content) can be assumed to be normally (Gaussian) distributed, and can thus be described by a single number, the "root mean square" (RMS) value, also known as "standard deviation". Deterministic jitter - in contrast thereto - can be fully described only by a list of all its components, with both a relative timing and a relative probability value at each component.

Following the model, the peak-to-peak jitter value for pure random jitter is a function of the RMS-value and the desired residual BER value. For deterministic jitter, the peak-to-peak jitter value represents the time range between the outermost deterministic jitter components.

According to the present invention, a reference measurement is provided in a measurement system for a first digital signal with substantially no data dependency. Preferably the reference measurement is provided for a clock signal or a signal derived therefrom without inducing data dependency. Such signal derived from the clock signal can be a signal with multiple clock frequency or fractions thereof. A reference jitter value is then determined from the reference measurement representing an amount of jitter detected for the reference measurement. Preferably, a peak-to-peak jitter value is determined as reference jitter value for the reference signal.

Since the reference signal is selected to be substantially without data dependency, it will be assumed according to the present invention that the determined reference jitter value represents the amount of random jitter present in the measurement system. It is obvious that the longer the reference measurement will be executed, the better the determined reference jitter value can be expected to represent the random jitter of the measuring system. This is due to the fact that random jitter is generally unbounded, and the likelihood of observing extreme events increases with the observation time.

In a second measurement, a second digital data signal will be measured using substantially the same measurement system as for the reference measurement. The second digital data signal represents the actual data signal to be measured and can be e.g. a 'real-life' data signal or a standardized test pattern (such as a pseudo random binary stream PRBS, a worst case jitter pattern, etc.). A jitter value (preferably a peak-to-peak jitter value) will be determined for the second data signal in accordance with the determination of the reference jitter value.

For deriving a corrected jitter value for the second data signal, the determined reference jitter value will be subtracted from the jitter value determined in the second measurement. Thus, the corrected jitter value represents the deterministic jitter proportion of the second data signal, since the determined reference jitter value substantially represents the random jitter contribution of the measurement system. In case that peak-to-peak jitter values have been determined, the corrected jitter value results from a subtraction of the peak-to-peak jitter values derived from the second and the reference measurements.

While the reference measurement can be preferably provided closely before the actual (second) measurement, it is clear that a longer time period between reference and actual measurement can be afforded in case that less accuracy is required or the measurement system can be regarded as substantially stable in that time period.

The invention can be partly or entirely embodied or supported by one or more suitable software programs, which can be stored on or otherwise provided by any kind of data carrier, and which might be executed in or by any suitable data processing unit.

The invention is preferably executed using a jitter determination unit for determining a jitter value for a digital signal received from a device under test - DUT -. The jitter value represents an amount of jitter detected for the received digital signal. The jitter determination unit comprises a subtraction unit adapted for deriving a corrected jitter value by providing a subtraction of the determined jitter value and a reference jitter value, with the reference jitter value being determined from a reference measurement using a digital reference signal with substantially no data dependency.

### BRIEF DESCRIPTION OF THE DRAWINGS

Other objects and many of the attendant advantages of the present invention will be readily appreciated and become better understood by reference to the following detailed description when considering in connection with the accompanied drawings. Features that are substantially or functionally equal or similar will be referred to with the same reference sign(s).
- Figs. 1-2: show the bathtub curve and the jitter histogram for a Reference Measurement according to the invention.
- Figs. 3-4: show the bathtub curve and the jitter histogram for a Test Pattern Measurement according to the invention.

### DETAILED DESCRIPTION OF THE INVENTION

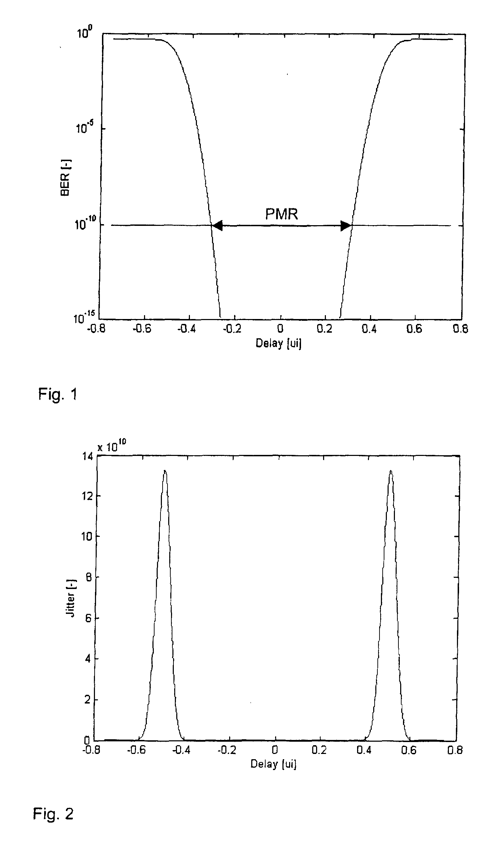

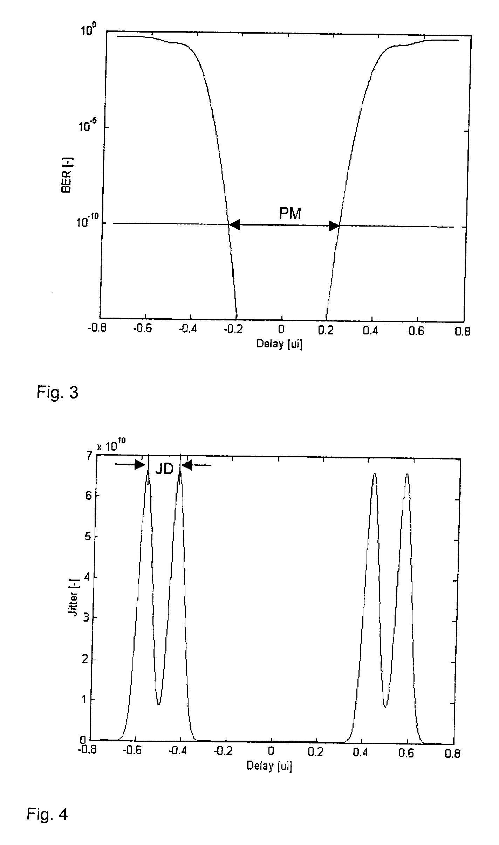

In a preferred embodiment for obtaining a corrected jitter value (substantially representing the data-dependent or deterministic jitter amount) of a digital data signal to be measured, the following steps are executed using e.g. the aforementioned Agilent® 81250 ParBERT®:
1) A reference bathtub curve (Fig. 1, with the x-axis denoting the delay time in unit intervals ui, and the y-axis denoting BER values) is determined for a clock signal as a test pattern without data jitter. A reference peak-to-peak jitter value is determined (as the system period minus the phase margin PM) at a given residual BER value. The reference phase margin value PMR represents the width of the reference bathtub curve at the given residual BER value. In the example of Fig.1 with the given residual BER value of 10 ^{⁻10}, the determined reference peak-to-peak jitter value is 0.38ui resulting from 1ui (as the system period) minus PMR = 0.62ui. Fig. 2 shows the derived jitter histogram (in linear scale) for the residual BER value of 10⁻¹⁰.
2) A second bathtub curve is then determined for the digital data signal to be measured and a peak-to-peak jitter is determined at the given residual BER value. In the example of Fig. 3 with a PRBS test pattern and the given residual BER value of 10⁻¹⁰, the determined peak-to-peak jitter value is 0.52ui resulting from 1ui (as the system period) minus PM = 0.48ui. Fig. 4 shows the jitter histogram corresponding to Fig. 3.
3) The corrected jitter value is then calculated by subtracting the reference peak-to-peak jitter value from the determined peak-to-peak jitter value. In the example here, the corrected jitter value yields from the difference between the two peak-to-peak values: 0.52ui-0.38ui = 0.14ui.

The result can be verified in Fig. 4: the corrected jitter value represents the data jitter JD as the time difference between the outermost peaks (maxima) of the left or right jitter histogram. For the left histogram: mu1 = -0.57ui, mu2=-0.43ui, difference is 0.14ui.

## Claims

1. A method for determining a corrected jitter value of a digital data signal to be measured, comprising the steps of:
(a) determining a reference jitter value from a reference measurement for a first digital signal with substantially no data dependency, the reference jitter value representing an amount of jitter detected for the reference measurement,
(b) determining a jitter value from a data measurement for the digital data signal, the jitter value representing an amount of jitter detected for the data measurement, and
(c) deriving the corrected jitter value (JD) by a subtraction of the determined reference jitter value and the determined jitter value.

2. The method of claim 1, wherein step (a) comprises a step of providing the reference measurement for the first digital signal with substantially no data dependency.

3. The method of claim 1 or 2, wherein step (b) comprises a step of providing the data measurement for the digital data signal.

4. The method of claim 1 or any one of the above claims, wherein step (c) comprises a step of deriving the corrected jitter value by subtracting the determined reference jitter value from the determined jitter value.

5. The method of claim 1 or any one of the above claims, wherein the first digital signal is step (a) is a clock signal or a signal derived therefrom.

6. The method of claim 1 or any one of the above claims, wherein the reference jitter value as well as the jitter value are determined as peak-to-peak jitter values.

7. The method of claim 6, wherein the each peak-to-peak jitter value is determined as at least one of the minimum full range that excludes a certain part of the total jitter population, or the value of a system period or system clock period minus a phase margin value for a given residual bit error rate - BER - value, with the phase margin value representing the width of a BER histogram at the given residual BER value.

8. The method of claim 1 or any one of the above claims, wherein the digital data signal is at least one of an actual data signal to be measured, a standardized test pattern, a pseudo random binary stream - PRBS-, or a worst case jitter pattern.

9. The method of claim 1 or any one of the above claims, wherein the steps (a) and (b), in any order, are executed in a measurement system within a time period wherein the condition of the measurement system is regarded to be substantially unchanged within a given accuracy.

10. A method for determining a corrected jitter value of a digital data signal to be measured in a measurement system, comprising the steps of:
(a) providing a reference measurement for a first digital signal with substantially no data dependency,
(b) determining a reference jitter value from the reference measurement representing an amount of jitter detected for the reference measurement,
(c) providing a data measurement for the digital data signal,
(d) determining a jitter value from the data measurement representing an amount of jitter detected for the data measurement, and
(e) deriving the corrected jitter value by subtracting the determined reference jitter value from the determined jitter value.

11. A software program or product, preferably stored on a data carrier, for executing the method of claim 1 or any one of the above claims when run on a data processing system such as a computer.

12. A jitter determination unit adapted for determining a jitter value for a digital signal received from a device under test - DUT -, wherein the jitter value represents an amount of jitter detected for the received digital signal, the jitter determination unit comprising a subtraction unit adapted for deriving a corrected jitter value (JD) by providing a subtraction of the determined jitter value and a reference jitter value, with the reference jitter value being determined from a reference measurement using a digital reference signal with substantially no data dependency.

13. A measurement device adapted for determining a corrected jitter value (JD) of a digital data signal to be measured, comprising:
a signal receiving unit adapted for receiving digital signals from a device under test - DUT -, and
a jitter determination unit adapted for determining a jitter value for each received digital signal, the jitter value representing an amount of jitter detected for the received digital signal,
wherein the jitter determination unit comprises a subtraction unit adapted for deriving the corrected jitter value (JD) by providing a subtraction of the determined jitter value and a determined reference jitter value, with the reference jitter value being determined from a reference measurement using a digital signal with substantially no data dependency.

## Amended claims

### Amended claims in accordance with Rule 86(2) EPC.

1. A method for determining a corrected jitter value of a digital data signal to be measured, comprising the steps of:
(a) determining a reference jitter value from a reference measurement for a first digital signal with substantially no data dependency, the reference jitter value representing an amount of jitter detected for the reference measurement,
(b) determining a jitter value from a data measurement for the digital data signal, the jitter value representing an amount of jitter detected for the data measurement, and
(c) deriving the corrected jitter value (JD) by a subtraction of the determined reference jitter value and the determined jitter value,
wherein the reference jitter value as well as the jitter value are determined as peak-to-peak jitter values, and each peak-to-peak jitter value is determined as at least one of: the minimum full range that excludes a certain part of the total jitter population, or the value of a system period or system clock period minus a phase margin value for a given residual bit error rate - BER - value, with the phase margin value representing the width of a BER histogram at the given residual BER value.

2. The method of claim 1, wherein step (a) comprises a step of providing the reference measurement for the first digital signal with substantially no data dependency.

3. The method of claim 1 or 2, wherein step (b) comprises a step of providing the data measurement for the digital data signal.

4. The method of claim 1 or any one of the above claims, wherein step (c) comprises a step of deriving the corrected jitter value by subtracting the determined reference jitter value from the determined jitter value.

5. The method of claim 1 or any one of the above claims, wherein the first digital signal is step (a) is a clock signal or a signal derived therefrom.

6. The method of claim 1 or any one of the above claims, wherein the digital data signal is at least one of an actual data signal to be measured, a standardized test pattern, a pseudo random binary stream - PRBS-, or a worst case jitter pattern.

7. The method of claim 1 or any one of the above claims, wherein the steps (a) and (b), in any order, are executed in a measurement system within a time period wherein the condition of the measurement system is regarded to be substantially unchanged within a given accuracy.

8. A software program or product, preferably stored on a data carrier, for executing the method of claim 1 or any one of the above claims when run on a data processing system such as a computer.

9. A jitter determination unit adapted for determining a jitter value for a digital signal received from a device under test - DUT -, wherein the jitter value represents an amount of jitter detected for the received digital signal, the jitter determination unit comprising:
a subtraction unit adapted for deriving a corrected jitter value (JD) by providing a subtraction of the determined jitter value and a reference jitter value, with the reference jitter value being determined from a reference measurement using a digital reference signal with substantially no data dependency,
wherein the reference jitter value as well as the jitter value are determined as peak-to-peak jitter values, and each peak-to-peak jitter value is determined as at least one of: the minimum full range that excludes a certain part of the total jitter population, or the value of a system period or system clock period minus a phase margin value for a given residual bit error rate - BER - value, with the phase margin value representing the width of a BER histogram at the given residual BER value.

10. A measurement device adapted for determining a corrected jitter value (JD) of a digital data signal to be measured, comprising:
a signal receiving unit adapted for receiving digital signals from a device under test - DUT -, and
a jitter determination unit adapted for determining a jitter value for each received digital signal, the jitter value representing an amount of jitter detected for the received digital signal,
wherein the jitter determination unit comprises a subtraction unit adapted for deriving the corrected jitter value (JD) by providing a subtraction of the determined jitter value and a determined reference jitter value, with the reference jitter value being determined from a reference measurement using a digital signal with substantially no data dependency, and
wherein the reference jitter value as well as the jitter value are determined as peak-to-peak jitter values, and each peak-to-peak jitter value is determined as at least one of: the minimum full range that excludes a certain part of the total jitter population, or the value of a system period or system clock period minus a phase margin value for a given residual bit error rate - BER - value, with the phase margin value representing the width of a BER histogram at the given residual BER value.
